# EUROPEAN PATENT APPLICATION

(11) **EP 1 683 623 A2**
(43) Date of publication of application: **26.07.2006**
(21) Application number: 06000675.6
(22) Date of filing: 13.01.2006
(51) Int. Cl.: B29C 47/22, B29C 47/92

(54) **Device and method for dynamic flow rate control on extrusion heads for parisons**

(30) Priority: 21.01.2005 IT MI20050067
(71) Applicant: Uniloy Milacron S.R.L., 20013 Magenta (MI) (IT)
(72) Inventor: Bertolotti, Gianluca, 20080 Ozzero (MI) (IT)
(74) Representative: Petruzziello, Aldo

(57) **Abstract**

A device (1; 200) is described for dynamic flow rate control on extrusion heads for blow-moulding of parisons comprising a distributor (3) able to distribute the flow of melt into two extrusion heads (M. S), a control valve (8) disposed upstream of an extrusion head (M) to control the flow of melt towards said extrusion head (M), and measurement means (5M, 5S; 9M, 9S) able to measure a parameter indicating the flow of melt into the extrusion heads (M, S) and accordingly send values indicative of said parameter to calculation means (6) which perform a comparison of said values and accordingly control the control valve (8) to control the flow of melt towards said extrusion head (M).

## Description

The present invetnion refers to the sector of blow moulding machines for polymer materials with more than one extrusion head, and in particular for control of the speed and amount of material that flows through these extrusion heads.

Specific reference will be made herein to twin-headed extruders, it being understood that the present invention also extends to extruders with more than two heads.

The blow moulding process is a method used fro the production of parisons of plastic material. It consists essentially of four steps: plasticization, formation of the parison, blowing and cooling.

### a) Plasticization

In this first stage the polymer material, in powder or granules, is fed to an extrusion screw, which provides the materially principally with the energy to plasticize it and convey it in the direction of an extrusion head.

### b) Formation of the parison

In this stage, which takes place in the extrusion head, the material coming from the extruder is introduced into the extrusion head. The molten polymer takes a cylindrical shape therefrom, forming the parison.

### c) Blowing

In this stage the parison is closed in the mould and air is introduced to make the walls of the parison adhere to the walls of the mould.

### d) Cooling

In this last stage, the molten polymer which has been made to adhere to the walls of the mould by means of the pressurized air cools through contact with the cooled mould to give the final article dimensional stability and mechanical rigidity.

In order to increase the production capacity of an extrusion and blow moulding machine, it is usual to use multiple heads, with the purpose of having multiple parisons for use in particular blowing applications. Two types of extrusion heads are generally known: continuous extrusion heads and accumulator heads.

### Blow-moulding with continuous heads

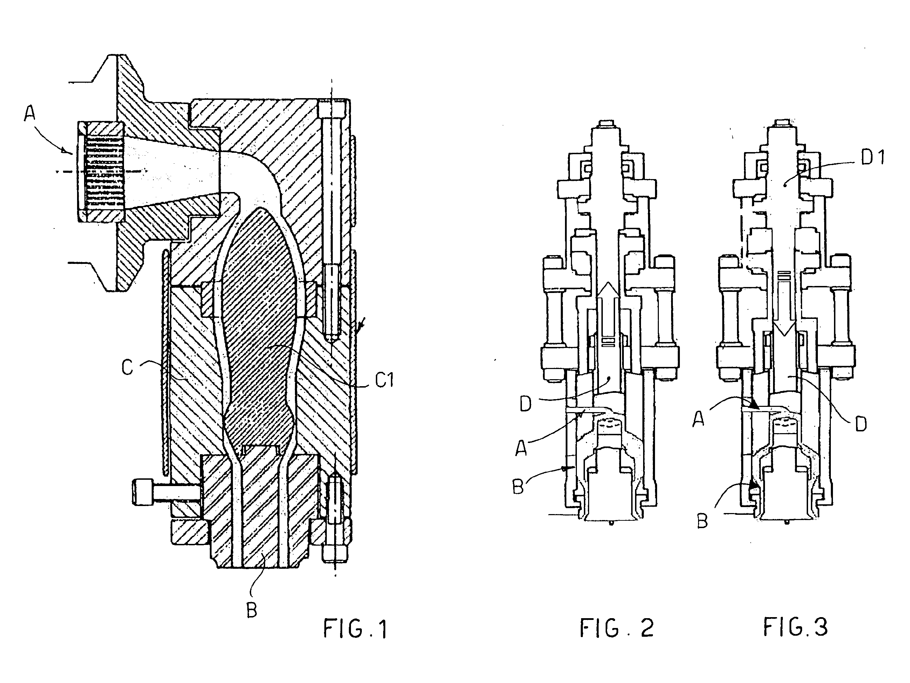

A continuous head is illustrated in Figure 1. The molten material coming from the extruder enters an entry channel A of the head and after having passed through a distribution area C within which is provided a core or male C1 which gives the melt a tubular shape, emerges from a die B to form the parison. As can be seen clearly in Figure 1, this head theoretically does not present transient states during operation. In fact the material flows more or less constantly into the distribution area C.

The problem related to blow-moulding with twin continuous heads is due to the case in which this twin head configuration is used to produce two articles of different shapes and/or having a different core C1 and die B. In this case, in order to have the same cycle time, the pressure drop in the melt must be different for the two heads.

### Blow-moulding with accumulator heads

In accumulator heads the extrusion process is divided into two stages: the accumulation or refilling stage illustrated in Figure 2 and the extrusion stage illustrated in Figure 3.

As shown in Figure 2, in the first stage of accumulation the material coming from the extruder, through an inlet channel A, enters an accumulation chamber B, and at the same time the pressure generated by its presence inside the accumulation chamber B pushes an extrusion ram D upwards. Once filling of the accumulator chamber B equal to that established by the operator has been accomplished, the extrusion stage takes place.

As shown in Figure 3, in the extrusion stage the extrusion ram D is pushed downwards by means of a hydraulic system D1, to empty the accumulator chamber B.

As can be seen, this type of process has a continuous transition stage. In fact the system is never in a state of stationary flow. In the case of blow moulding with multiple accumulator heads, the lack of perfect and continuous balancing of the flow rates on the heads leads to filling times that are unequal and non constant. This problem leads to a work cycle that is always variable, with an overall fall in the production capacity.

In order to solve at least partially the above mentioned drawbacks, at present controls of a static type are performed on extrusion heads, based on an empirical adjustment which is made from time to time by means of mechanical valves that intercept the flow of material inside one or more heads. With these controls, the operator acts mechanically on said valves, opening them and closing them, so as to create a local drop in pressure on an extrusion head.

Once the valve has been adjusted for a certain processing condition, it is unable to "follow" any changes that the process undergoes over time. For this reason the operator is forced to modify the mechanical adjustment of the valves of each individual head whenever the process conditions are no longer constant and if these variations are frequent, they make the process uncontrollable.

US patent 6.171.531 describes a method of simultaneously controlling multiple accumulator heads. By means of extrusion ram position transducers, the amount of melt accumulated in the accumulator chamber is detected. Accordingly, a valve of the hydraulic system which adjusts the pressure of the extrusion ram is controlled. As a result, the upward stroke of the extrusion ram is during refilling prevented or favoured, to ensure uniform refilling in all the extrusion heads.

This system which performs a loop feedback control on extrusion ram pressure proves somewhat complex and difficult to accomplish, especially if there are strong imbalances in refilling of the accumulator heads.

The object of the present invention is to overcome the drawbacks of the prior art, by providing a device and a method of dynamically controlling the flow rate on extrusion heads for blow-moulding of parisons, which are extremely precise, practical and simple to realize.

This object is achieved in accordance with the invention with the device and the method whose characteristics are listed in independent claims 1 and 9, respectively.

The device for dynamic flow rate control on extrusion heads for blow-moulding of parisons according to the invention comprises:
- a distributor able to distribute the flow of melt into at least two extrusion heads,
- at least one control valve disposed upstream of at least one extrusion head to control the flow of material towards said at least one extrusion head, and
- measuring means able to measure a parameter indicative of the flow of molten material in said extrusion heads and accordingly to send values indicating this measured parameter to calculating means which perform a comparison of said values and accordingly control said at least one control valve to control the flow of molten material towards said at least one extrusion head.

The device and method of the invention are based on the "comparison criterion". This criterion consists in comparing the characteristic parameter chosen to characterize the process measured on the heads, at each pre-set interval.

Said control parameter differs between accumulator heads and continuous heads. In the case of accumulator heads, it is the refill value of the head. In the case of continuous heads it is the time taken by the parison to intercept a photoelectric cell.

From the comparison of the control parameters, the system acts on a control servovalve situated before the inlet of a slave head, regulating the aperture thereof and consequently the flow rate on the head. On the other hand, a valve situated on a master head is set mechanically by the operator during the set-up stage, in a position compatible with the process.

Further characteristics of the invention will be made clearer by the detailed description that follows, referring to purely exemplifying and therefore non-limiting embodiments thereof, illustrated in the appended drawings, in which:
Figure 1 is an axial sectional view of a continuous extrusion head;
Figure 2 is a diagrammatic view, partially in axial section, illustrating an accumulator extrusion head during the accumulation stage;
Figure 3 is a view illustrating the accumulator extrusion head of Figure 2 during the extrusion stage;
Figure 4 is a diagrammatic view, partially in axial section, illustrating a twin extrusion head according to a first embodiment of the invention;
Figure 5 is a flow diagram illustrating an operating principle of the twin accumulator extrusion head of Figure 4; and
Figure 6 is a diagrammatic view, partially in axial section, illustrating a twin continuous extrusion head according to a second embodiment of the invention.

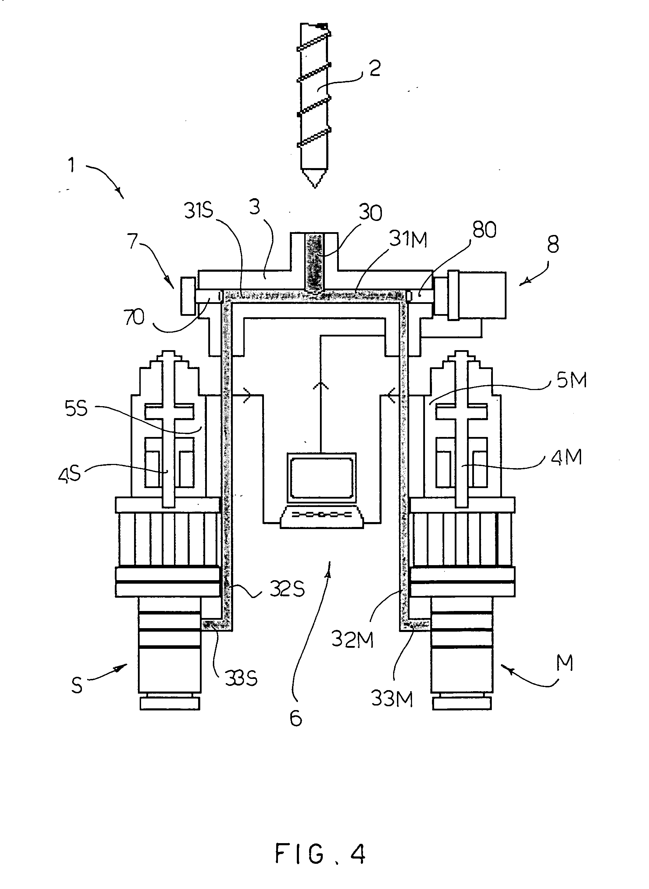

The device and method according to the invention for dynamic control of the flow rate on the extrusion heads for blow-moulding of parisons is described with the aid of Figures 4, 5 and 6.

Figure 4 shows a first embodiment of the device according to the invention comprising a twin accumulator extrusion head assembly, indicated as a whole with reference numeral 1. The twin head assembly 1 is disposed at the outlet of an extruder provided with an extrusion screw 2.

The twin head assembly comprises a distributor 3 formed by an upturned T-shaped connecting duct comprising a central vertical duct 30 from which two horizontal ducts 31M and 31S branch. The horizontal ducts 31M and 31 S continue with respective vertical ducts 32M and 32S which terminate in respective inlet ducts 33M and 33S which lead into the accumulation chamber of the respective extrusion heads M and S, henceforth called master head M and slave head S.

In this manner the flow of molten material pushed by the extrusion screw 2 enters the central duct 30 of the distributor and is distributed into the ducts 31M and 31S. Thus the melt flows into the ducts 32 M and 32S and though the inlet ducts 33M and 33S enters the accumulator chambers of the respective extrusion heads M and S.

Each head M ed S is provided with an extrusion ram 4M and 4S controlled by a hydraulic system. The extrusion ram 4M, 4S is mounted slidably in the accumulator chamber so as to follow refilling of material in the accumulator chamber and push the material out of the extrusion head once refilling has been completed.

A respective position transducer 5M and 5S is disposed on each extrusion ram 4M, 4S. Each transducer 5M and 5S is connected to a computer 6.

In this manner, each position transducer 5M and 5S can detect the position of the relative piston 4M and 4S which is indicative of the amount of molten mass contained in the accumulator chamber of the respective head M and S. According to the values read, the position transducer 5M and 5S send signals to the computer 6 indicating the position of the two rams 4M and 4S.

At the end of the distributor 3 near the slave head S is mounted a mechanical valve 7 whose gate pin 70 intercepts the flow of material directed towards the slave head S at the elbow meeting point between the horizontal duct 31S and the vertical duct 32S. The mechanical valve 7 can be regulated by the user to establish the desired flow towards the slave head S.

At the end of the distributor 3 near the master head M is mounted a servovalve or control valve 8 whose gate pin 80 intercepts the flow of melt towards the master head M at the point of elbow meeting between the horizontal duct 31M and the vertical duct 32M. The servovalve 8 is connected to the computer 6 and is controlled according to the control signals sent by the computer 6.

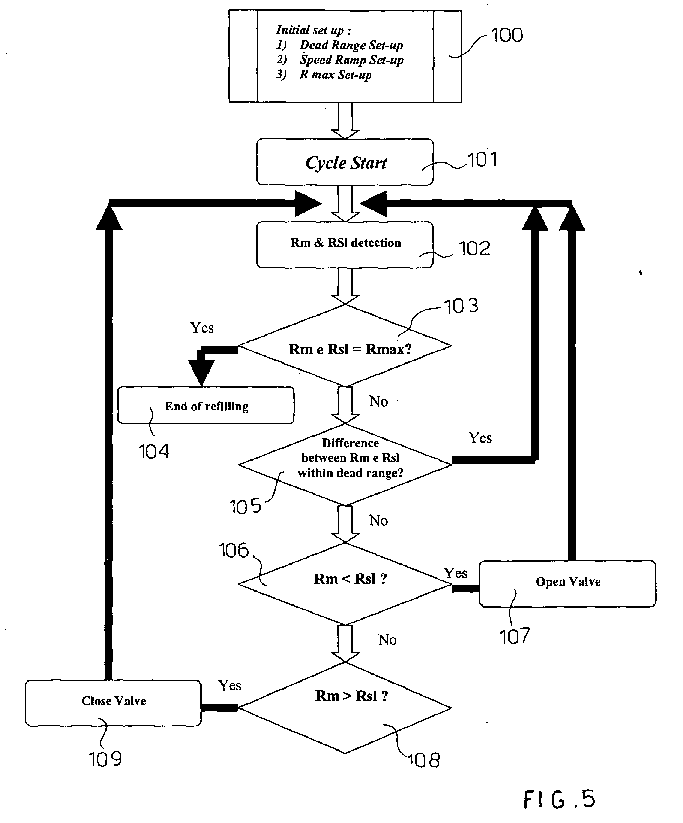

The logical operating principle of the method according to the invention for dynamic control of the flow rate in the case of twin accumulator heads is described with reference to Figure 5.

Before starting the cycle a set-up step 100 is carried out in which the initial set-ups are performed:
1) A dead range is set within which the control system does not have to intervene. For example, if the difference between the accumulated amount of the master head M and the slave head S is less than a certain fixed percentage, the control system does not intervene.
2) The speed ramp is set, that is the speed at which the accumulated amount of the master head M must conform to that of the slave head S.
3) The maximum refill Rmax that each master and slave head must contain is set. In fact, when the maximum refill value is reached, filling of the head is stopped to be able to begin the extrusion stage though the thrust of the relative ram 4M and 4S.

Once set-up step 100 has been completed the cycle 101 begins.

In step 102 the position transducers 5M and 5S detect the respective positions of the rams 4M and 4S and according to the values detected, send the computer 6 signals indicating the "accumulation amount" Rm and Rsl into the master head M and into the slave head S. It must be considered that during the accumulation stage the rams 4M and 4S return into the respective accumulator heads M and S. Thus the position of the rams is indicative of the amount of melt Rm and Rsl accumulated in the respective heads M and S.

In step 103, the computer 6 compares whether the quantity of refill Rm and Rs in each accumulator head M and S has reached the preset maximum refill value Rmax.

If the maximum refill value Rmax has been reached, the cycle proceeds to step 104, in which filling of the relative accumulator head is completed.

If, on the other hand, the maximum refill value Rmax has not been reached, the cycle proceeds to step 105 in which the difference between the refill amount Rm in the master headM and the refill amount Rsl in the slave head S is calculated.

If Rm - Rsl is within the pre-set dead range, the cycle returns to step 102.

If Rm - Rsl is outside the pre-set dead range, the cycle proceeds to step 106 in which the computer compares the refill of the master head Rm with the refill of the slave head Rsl

If Rm is less than Rsl, the cycle proceeds to step 107 in which the computer 6 sends a control signal to the servovalve 8 so as to open the die pin 80 to allow a greater flow of melt towards the master head M. Subsequently the cycle returns to step 102 to carry out a continuous loop feedback control.

If, on the other hand, from the comparison performed in step 106 Rm proves not to be less than Rsl, the cycle proceeds to step 108 in which Rm is certainly greater than Rsl. Then the cycle proceeds to step 109 in which the computer 6 sends a control signal to the servovalve 8 so as to close the gate pin 80 in order to have a smaller flow of melt towards the master head M. Subsequently the cycle returns to step 102 to perform a continuous/closed loop feedback control.

The system is able to adjust both the extent of the closure of the feed channel 32M towards the master head M and the speed ramp that this translation of the gate pin 80 of the servovalve 8 must accomplish.

Furthermore the so-called "dead range" inside which the changes are considered negligible by the system is defined and therefore no movement is performed by the system to control the differences in flow rate since these differences are considered nil.

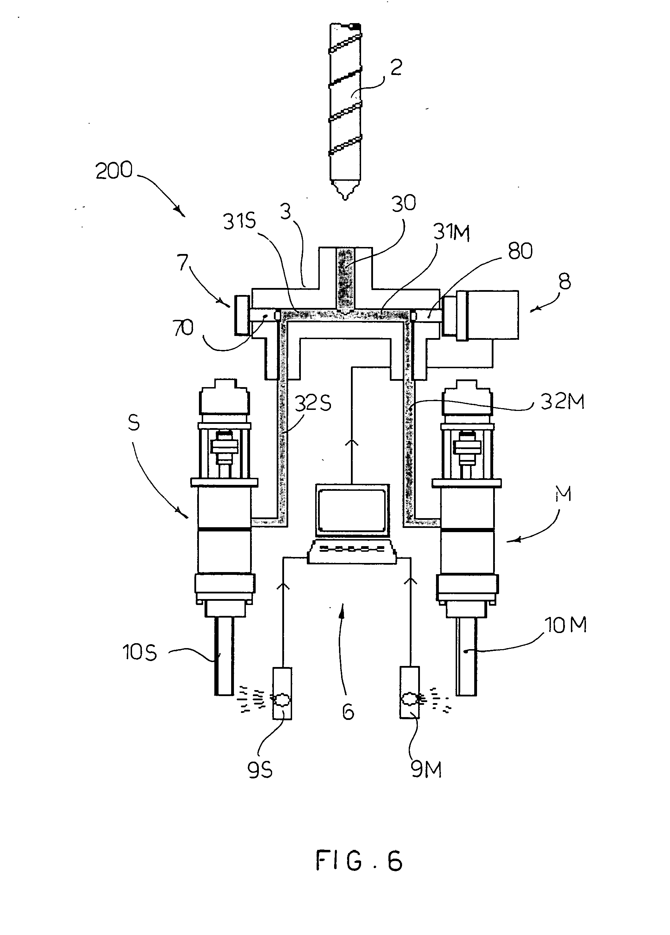

Figure 6 shows a device according to a second embodiment of the invention consisting of a twin head continuous extrusion assembly, indicated as a whole with reference numeral 200, in which like or corresponding elements to those described in the first embodiment are indicated with the same reference numerals and detailed description thereof is therefore omitted.

In this case, the continuous extrusion heads M and S have neither a refill chamber nor an extrusion ram. Respective parisons 10M and 10S emerge from the extrusion heads M and S in the form of continuous tubes. Disposed beneath the exit of the extrusion heads M and S are two photoelectric cells 9M and 9S which measure the length of the parison (Lm and Lsl), that is to say the time taken for each parison 10M and 10S to travel from the extrusion head outlet to the respective photoelectric cell 9M and 9S, so as to reach a pre-established length.

The photoelectric cells 9M and 9S are connected to the computer 6, so that the acquisition system of the computer 6 reads the control parameters coming from the two photoelectric cells 9M and 9S.

The difference in the value acquired (Lm-Lsl) is calculated and then a comparison is made, thus applying a control to the servovalve 8 for regulation of the flow rate as described in the first embodiment. The position of the two photoelectric cells 9M and 9S can be modified, so as to have two parisons 10M and 10S of different lengths.

The system is able to regulate both the extent of closure of the feed channel 32M of the master head M and the translation speed ramp of the gate pin 80 of the servovalve 8. Furthermore a so-called "dead range" is defined within which the changes are considered as negligible by the system and thus no movement is made by the system to control the differences which are considered nil.

The material coming from the extruder pushed by the extrusion screw 2 is distributed, by means of the distributor 3, to the master M and slave S heads. In these heads, the material is distributed so as to form the parison 10M and 10S. At the outlet from the heads there are photoelectric cells 9M and 9S, by means of which the difference in the time of passage of the two parisons 10M and 10S can be measured and the parameter which controls adjustment of the aperture of the control valve 8 is defined.

The photoelectric cells 9M e 9S can also be fixed at different heights, so as to have complete control of the cycle time, even in the case of a mould with two figures that are not the same.

In the present detailed description twin head extruders have been illustrated, it being understood that the invention also extends to multiple head extruders. In this case, if *n* extruders are provided, it will be necessary to proved *n*-1 servovalves 8 and thus to make the comparison between the parameters detected by all *n* extruders and control the *n*-1 servovalves accordingly.

Numerous changes and modifications of detail within the reach of a person skilled in the art can be made to the present embodiments of the invention without thereby departing form the scope of the invention as set forth in the appended claims.

## Claims

1. A device (1; 200) for dynamic control of the flow rate on extrusion heads for blow-moulding of parisons comprising:
- a distributor (3) able to distribute the flow of molten material to at least two extrusion heads (M,S).
- at least one control valve (8) disposed upstream of at least one extrusion head (M) to control the flow of melt towards said at least one extrusion head (M),
- detection means (5M, 5S; 9M, 9S) able to detect a parameter indicative of the flow of molten material in said extrusion heads (M, S) and accordingly send values indicative of said detected parameter to calculating means (6) which perform a comparison of said values and accordingly control said at least one control valve (8) to control the flow of melt towards said at least one extrusion head (M).

2. A device (1; 200) according to claim 1, **characterized in that** said control valve (8) is disposed in said distributor (3) and the gate pin (80) of said control valve intercepts a channel (32M) of the distributor which leads to said extrusion head (M).

3. A device (1; 200) according to claim 1 or 2, **characterized in that** it comprises a mechanical valve (7) disposed upstream of an extrusion head (S) and operable by the operator to regulate the flow of melt towards the extrusion head (S).

4. A device (1) according to any one of the preceding claims, **characterized in that** said extrusion heads (M, S) are accumulator extrusion heads and the parameter detected by said detection means (5M, 5S) is a parameter indicative of the amount of refill of melt in the accumulation chamber of said extrusion heads (M, S).

5. A device (1) according to claim 4, **characterized in that** said detection means (5M, 5S) comprise position transducers disposed on respective extrusion rams (4M, 4S) of said extrusion heads (M, S).

6. A device (1) according to claim 4 o 5, **characterized in that** it comprises two accumulator heads (M, S) and a control valve (8) disposed upstream of one of said two accumulator heads.

7. A device (200) according to any one of claims 1 to 3, **characterized in that** said extrusion heads (M, S) are continuous extrusion heads and the parameter measured by said detection means (9M, 9S) is a parameter indicating the length of the parison (10M, 10S) leaving said continuous extrusion heads (M, S).

8. A device (200) according to claim 7, **characterized in that** said detection means (9M, 9S) comprise photoelectric cells disposed at a pre-set distance from the outlet of said accumulator extrusion heads (M, S).

9. A method for dynamic flow rate control on extrusion heads (M, S) for blow-moulding of parisons comprising the following steps:
- detection of a parameter indicative of the flow of molten material in said extrusion heads (M, S),
- comparison of said detected parameters, and
- control of the flow of material in said extrusion heads (M, S) according to the comparison of the detected parameters.

10. A method according to claim 9, **characterized in that** it is performed on accumulator extrusion heads (M, S) in which said detected parameter is a value indicating the refill of melt inside the accumulator chamber of the accumulator head.

11. A method according to claim 9, **characterized in that** it is performed on continuous extrusion heads (M, S) in which said detected parameter is a value indicating the length of the parison (10M, 10S) emerging from the continuous head.
